# EUROPÄISCHE PATENTSCHRIFT

(11) **EP 1 037 934 B1**
(45) Veröffentlichungstag und Bekanntmachung des Hinweises auf die Patenterteilung: **17.09.2003**
(21) Anmeldenummer: 98961240.3
(22) Anmeldetag: 01.12.1998
(51) Int. Cl.: C08G 18/67, C09J 175/16

(54) **VERFAHREN ZUR HERSTELLUNG VON FOLIEN-VERBUNDMATERIALIEN UNTER VERWENDUNG VON KLEBSTOFF MIT MEHRSTUFIGER AUSHÄRTUNG**
PROCESS FOR PRODUCING FOIL-BASED COMPOSITE MATERIALS USING ADHESIVE WITH MULTISTAGE CURING
PROCEDE POUR LA FABRICATION DE MATERIAUX COMPOSITES A BASE DE FEUILLE EN UTILISANT UNE COLLE A DURCISSEMENT EN PLUSIEURS ETAPES

(30) Priorität: 10.12.1997 DE 19754926
(43) Veröffentlichungstag der Anmeldung: 27.09.2000
(73) Patentinhaber: Henkel Kommanditgesellschaft auf Aktien, 40589 Düsseldorf-Holthausen (DE)
(72) Erfinder: BOLTE, Gerd, D-40789 Monheim (DE); FERENCZ, Andreas, D-40223 Düsseldorf (DE); HUVER, Thomas, D-40625 Düsseldorf (DE)
(86) Internationale Anmeldenummer: EP9807752
(87) Internationale Veröffentlichungsnummer: WO99029754

(56) Entgegenhaltungen:
- EP-A- 0 175 474
- EP-A- 0 603 046
- DE-A- 4 041 753
- US-A- 4 507 458

## Beschreibung

Die Erfindung betrifft ein Verfahren zur Herstellung von Folien-Verbundmaterialien, bei denen ein Klebstoff, verwendet wird, der die zwei Komponenten A und B enthält, wobei die Komponente A und Komponente B der Definition des Anspruchs 1 entspricht.

Die maschinelle Herstellung von Verbundmaterialien, insbesondere von Verbundfolien, wird in der Praxis häufig durch Kaschieren unter Verwendung lösemittelhaltiger Klebstoffe durchgeführt. Eine solche Vorgehensweise ist unter verschiedenen Aspekten jedoch nachteilig.

Bei der Verwendung lösemittelhaltiger Klebstoffe beim Kaschieren müssen beispielsweise unter hohem Energieverbrauch erhebliche Lösemittelmengen während des Kaschierprozesses verdampft werden. Weiterhin ist, zwecks Vermeidung des Ausstoßes von Lösemitteldämpfen in die Atmosphäre, eine aufwendige Reinigung der beim Verdunsten des Lösemittels anfallenden Abluft nötig. In jüngerer Zeit ging die Tendenz bei der Herstellung von Verbundwerkstoffen daher immer mehr dahin, anstatt der lösemittelhaltigen Systeme solche ohne Lösemittel zu verwenden.

Der Verzicht auf Lösemittel beeinträchtigt aber in hohem Maße die Verarbeitbarkeit eines Klebstoffs. Klebstoffe, die zur Herstellung von Verbundmaterialien geeignet sind, sollen zunächst eine geeignete Verarbeitungsviskosität aufweisen, aber möglichst nur geringe Mengen leicht-flüchtiger Stoffe in die Umgebung freisetzen. Weiterhin besteht an solche Klebstoffe die Anforderung, daß sie direkt nach dem Auftrag auf mindestens eines der zu verbindenden Materialien nach deren Zusammenfügen über eine ausreichend gute Anfangshaftung verfügen, die eine Verschiebung der verklebten Materialien gegeneinander möglichst verhindert. Darüber hinaus soll eine solche Verklebung jedoch auch über ein ausreichendes Maß an Flexibilität verfügen, um die verschiedenen Zug- und Dehnbelastungen, denen das noch im Verarbeitungsstadium befindliche Verbundmaterial in der Regel ausgesetzt ist, ohne Schaden für die Klebeverbindung und ohne Schaden für das verklebte Material, zu überstehen.

Bei den als Stand der Technik bekannten, konventionellen, lösemittelfreien Klebstoffen besteht ein grundsätzlicher Nachteil daher in der Regel darin, daß die Hafteigenschaften des Klebstoffs nach dem Auftrag aufgrund der niedrigen Viskosität unbefriedigend sind und die Klebeverbindung daher bis zum endgültigen Aushärten keinen Belastungen unterzogen werden darf, damit der Verbundwerkstoff die mit der Verklebung beabsichtigte Form behält. Hierzu sind jedoch lange Aushärtezeiten notwendig, welche die Herstellung von Verbundwerkstoffen mit solchen Klebstoffen häufig unwirtschaftlich machen.

Ein Ansatz zur Vermeidung der oben beschriebenen Nachteile bestand darin, ein mehrstufig härtendes Klebstoffsystem bei der Herstellung von Verbundmaterialien einzusetzen. Hierbei wurden Klebstoffe benutzt, die in einer ersten Stufe durch Bestrahlung einer schnellen, ersten Härtungsreaktion unterzogen wurden. Die Festigkeit der Klebeverbindung nach dieser ersten Härtungsreaktion sollte dergestalt sein, daß sie eine problemlose Handhabung der verbundenen Gegenstände oder Materialien ermöglicht. In einer zweiten Härtungsstufe härtete der Klebstoff dann weiter aus, bis er die gewünschte Endfestigkeit erreicht hatte.

Die DE-A 29 13 676 offenbart ein Verfahren zur Herstellung von Verbundfolien mittels lösemittelfreier Klebstoffe. Beschrieben wird ein lösemittelfreier, bei Raumtemperatur flüssiger Klebstoff, der aus oligomeren und/oder polymeren Estern und/oder Ethern besteht, die sowohl freie Isocyanatgruppen als auch freie (Meth)acrylatgruppen in einem Molekül enthalten.

Die EP-B 0 564 483 betrifft Reaktivkontaktkleber, Verfahren zu ihrer Herstellung und ihre Verwendung. Die Druckschrift beschreibt zweistufig polymerisierbare Beschichtungsmassen auf Urethanbasis, die durch einen Gehalt an UV-polymerisierbaren Acrylatgruppen im Rahmen einer ersten Härtungsstufe zu einem verfestigten, jedoch noch stukturgebend verformbaren bzw. prägbaren Material ausgehärtet werden können, worauf in einer nachfolgenden zweiten Stufe die irreversible Verfestigung erfolgt. Zur Viskositätsabsenkung werden dem Klebstoff monofunktionelle Acrylate zugegeben. Der beschriebene Klebstoff weist nach der Bestrahlung Druckklebrigkeit auf; als Verwendungszweck des beschriebenen Kontaktklebers wird die Verklebung von Holz und/oder Kunststoffteilen bei bis zu etwa 70°C, vorzugsweise bei Raumtemperatur, genannt.

Häufig sind Verbundmaterialien direkt nach ihrer Herstellung noch weiteren Verarbeitungsprozessen unterworfen, die ein hohes Maß an Flexibilität vom Verbundwerkstoff verlangen. Die im Verbundmaterial vorliegende Verklebung muß daher über eine ausreichende Flexibilität verfügen, die dessen weitere Verarbeitung erlaubt, ohne daß es zu Beeinträchtigungen aufgrund mangelnder Flexibilität der Klebeverbindung kommt. Hierzu ist es notwendig, daß die Klebeverbindung anfänglich zwar eine ausreichende Festigkeit aufweist, die ein Auftrennen des Verbundmaterials in seine ursprünglichen Bestandteile verhindert, andererseits jedoch auch noch nicht so fest ist, daß bei Zug- oder Biegebeanspruchung des Verbundmaterials Beeinträchtigungen aufgrund einer zu festen Klebeverbindung auftreten.

Die aus dem Stand der Technik bekannten Klebstoffe weisen den Nachteil auf, daß sie entweder eine zu feste Anfangshaftung zeigen, die sich nachteilig auf die Flexibilität des Materials auswirkt, oder aber eine zu geringe Endfestigkeit, was für die Gebrauchseigenschaften des Verbundmaterials nachteilig sein kann. Weiterhin werden die im Stand der Technik beschriebenen Reaktivverdünner häufig nicht vollständig umgesetzt. Dies kann zu Geruchsbelästigungen und gegebenenfalls sogar zu einer Gesundheitsgefährdung aufgrund migrationsfähiger, niedermolekularer Verbindungen (Migrate) führen.

Es war daher Aufgabe der vorliegenden Erfindung, ein Verfahren zur Verfügung zu stellen, das sich zur Herstellung von Folienverbunden eignet, wobei sich nach Durchführung der Verklebung noch eine ausreichende Flexibilität der Klebeverbindung ergibt und das nach vollständiger Aushärtung zu Verbundwerkstoffen mit ausgezeichneten Festigkeitswerten in bezug auf die Klebeverbindung führt.

Gelöst wird die erfindungsgemäße Aufgabe durch die Verwendung eines Klebstoffs, der ein Polymeres mit niedriger Viskosität, das sowohl durch Bestrahlung polymerisierbare funktionelle Gruppen als auch durch Feuchtigkeit härtende funktionelle Gruppen aufweist, und eine Verbindung mit einem Molekulargewicht von mindestens etwa 100 und mindestens zwei durch Bestrahlung polymerisierbare funktionelle Gruppen enthält

Erfindungsgemäß verwendet wird ein Klebstoff, enthaltend zwei Komponenten A und B, wobei
(a) als Komponente A mindestens ein Polymeres mit einem Molekulargewicht (Mₙ) von mindestens 800, das mindestens eine durch Bestrahlung mit UV-Licht oder mit Elektronenstrahlen polymerisierbare funktionelle Gruppe und mindestens eine, zur Reaktion mit einer mindestens ein acides Wasserstoffatom aufweisenden Verbindung fähige, funktionelle Gruppe aufweist und
(b) als Komponente B mindestens eine Verbindung mit einem Molekulargewicht (Mₙ) von 100 bis 8000, die mindestens zwei durch Bestrahlung mit UV-Licht oder mit Elektronenstrahlen polymerisierbare funktionelle Gruppen aufweist.

In einer bevorzugten Ausführungsform der vorliegenden Erfindung beträgt das Molekulargewicht (Mₙ) der als Komponente B eingesetzten mindestens einen Verbindung, die mindestens zwei durch Bestrahlung mit UV-Licht oder mit Elektronenstrahlen polymerisierbare funktionelle Gruppen aufweist, 100 bis 2000.

Unter einer "polymerisierbaren funktionellen Gruppe" wird eine Gruppe verstanden, die durch radikalische, anionische oder kationische Polymerisation, Polykondensation oder Polyaddition mit einer geeigneten weiteren funktionellen Gruppe unter Erhöhung des Molekulargewichts des sie tragenden Moleküls reagieren kann. Im Falle einer Molekulargewichtserhöhung durch radikalische Polymerisation handelt es sich bei der funktionellen Gruppe in der Regel vorzugsweise um eine olefinisch ungesättigte Doppelbindung. Im Falle der Molekulargewichtserhöhung durch Polykondensation kann es sich bei der funktionellen Gruppe beispielsweise um eine Säuregruppe oder um eine Alkoholgruppe handeln, im Falle der Polyaddition sind als funktionelle Gruppen beispielsweise Isocyanatgruppen oder Epoxidgruppen geeignet

Als durch Bestrahlung mit UV-Licht oder mit Elektronenstrahlen polymerisierbare funktionelle Gruppe eignet sich beispielsweise eine Gruppe mit olefinisch ungesättigter Doppelbindung. Im Rahmen der vorliegenden Erfindung sind hierbei olefinisch ungesättigte Doppelbindungen bevorzugt, wie sie beispielsweise in den Derivaten der Acrylsäure oder des Styrols vorliegen. Besonders geeignet und im Rahmen der vorliegenden Erfindung bevorzugt sind die Derivate der Acrylsäure, beispielsweise die Acrylate und die Methacrylate.

Im weiteren Verlauf des Textes werden öfters, sofern auf die Eigenschaften eines Klebstoffs bezug genommen wird, die Begriffe "Härtung", "Aushärtung" oder ähnliches benutzt, wie sie in der Regel vom Fachmann üblicherweise eingesetzt werden. Die "Härtung" oder "Aushärtung" einer polymerisierbare Verbindungen enthaltenden Zusammensetzung beruht in der Regel auf einer Polymerisationsreaktion, die mindestens mit einer Molekulargewichtserhöhung der in der Zusammensetzung enthaltenen Verbindungen einhergeht. Üblicherweise finden jedoch gleichzeitig auch noch Vernetzungsreaktionen statt. Die Begriffe "Härtung", "Aushärtung" oder ähnliche Begriffe beziehen sich im Rahmen des folgenden Textes daher auf Polymerisationsreaktionen, wie sie innerhalb einzelner Komponenten der jeweils in Zusammenhang mit dem Begriff betrachteten Zusammensetzung ablaufen können, beispielsweise die strahleninduzierte Polymerisation einer Doppelbindungen tragenden Komponente. Die Begriffe beziehen sich ebenfalls auf Polymerisationsreaktionen, wie sie unter verschiedenen Komponenten der jeweils betrachteten Zusammensetzung ablaufen können, beispielsweise die Reaktion einer Isocyanatgruppen tragenden Komponente mit einer OH-Gruppen tragenden Komponente. Die Begriffe beziehen sich weiterhin auf Polymerisationsreaktionen, wie sie zwischen einer Komponente der betrachteten Zusammensetzung und einer durch äußeren Einfluß in die Zusammensetzung gelangenden Komponente ablaufen können, beispielsweise die Reaktion zwischen Isocyanatgruppen und Luftfeuchtigkeit.

Als zur Reaktion mit einer mindestens ein acides Wasserstoffatom aufweisenden Verbindung fähige funktionelle Gruppe eignet sich im Rahmen der vorliegenden Erfindung insbesondere die Isocyanatgruppe oder die Epoxidgruppe, wobei die Isocyanatgruppe besonders bevorzugt ist .

Unter einer ein acides Wasserstoffatom aufweisenden Verbindung wird eine Verbindung verstanden, die ein nach dem Zerewittinoff Test bestimmbares, an ein N-, O- oder S-Atom gebundenes, aktives Wasserstoffatom aufweist. Hierunter fallen insbesondere die Wasserstoffatome von Wasser, Carboxy-, Amino-, Imino-, Hydroxy-, und Thiolgruppen. Im Rahmen der vorliegenden Erfindung ist insbesondere Wasser bevorzugt, oder solche Verbindungen, die Amino- oder Hydroxygruppen oder beides aufweisen, oder Gemische aus zwei oder mehr davon.

Als Komponente A ist im erfindungsgemäßen Klebstoff mindestens ein Polymeres mit einem Molekulargewicht von mindestens 800 enthalten. Zum Einsatz als Komponente A sind alle üblicherweise in Klebstoffen einsetzbaren polymeren Verbindungen geeignet, beispielsweise Polyacrylate, Polyester, Polyether, Polycarbonate, Polyacetale, Polyurethane, Polyolefine, oder Kautschukpolymere wie Nitril- oder Styrol/Butadien-Kautschuk, sofern sie mindestens eine durch Bestrahlung mit UV-Licht oder mit Elektronenstrahlen polymerisierbare funktionelle Gruppe und mindestens eine zur Reaktion mit einer mindestens ein acides Wasserstoffatom aufweisenden Verbindung fähige funktionelle Gruppe aufweisen.

Vorzugsweise werden in den erfindungsgemäßen Klebstoffen als Komponente A jedoch Polyacrylate, Polyester oder Polyurethane eingesetzt, da die genannten Polymeren eine besonders einfache Möglichkeit bieten, die erfindungsgemäß erforderlichen funktionellen Gruppen am Polymermolekül anzubringen.

Besonders einfach lassen sich die erfindungsgemäß als Komponente A einsetzbaren Polymeren herstellen, indem von einem Basis-Polymeren ausgegangen wird, das mindestens zwei mit Isocyanatgruppen reaktionsfähige funktionelle Gruppen, vorzugsweise OH-Gruppen, im Polymermolekül aufweist. An ein solches Basis-Polymeres kann durch Umsetzung mit einem Polyisocyanat oder einem geeignet funktionalisierten Monoisocyanat auf besonders einfache Weise die gewünschte funktionelle Gruppe angebracht werden.

Zum Einsatz als Basis-Polymeres geeignet ist beispielsweise ein Polymeres ausgewählt aus einer Gruppe enthaltend Polyester, Polyether, Polycarbonate oder Polyacetale mit einem Molekulargewicht (Mₙ) von mindestens etwa 200, oder Gemische aus zwei oder mehr davon, die terminale OH-Gruppen aufweisen.

Im Rahmen der vorliegenden Erfindung als Basis-Polymere zur Herstellung der Komponente A einsetzbare Polyester können in einer dem Fachmann bekannten Weise durch Polykondensation von Säure- und Alkoholkomponenten gewonnen werden, insbesondere durch Polykondensation einer Polycarbonsäure oder eines Gemischs aus zwei oder mehr Polycarbonsäuren und einem Polyol oder einem Gemisch aus zwei oder mehr Polyolen.

Im Rahmen der vorliegenden Erfindung zur Herstellung des Basis-Polymeren geeignete , Polycarbonsäuren können auf einem aliphatischen, cycloaliphatischen, araliphatischen, aromatischen oder heterocyclischen Grundkörper aufgebaut sein und gegebenenfalls neben den mindestens zwei Carbonsäuregruppen noch einen oder mehrere im Rahmen einer Polykondensation nicht-reaktive Substituenten, beispielsweise Halogenatome oder olefinisch ungesättigte Doppelbindungen, aufweisen. Gegebenenfalls können anstatt der freien Carbonsäuren auch deren Säureanhydride (soweit existent), oder deren Ester mit C₁₋₅-Monoalkoholen, oder Gemische aus zwei oder mehr davon, zur Polykondensation eingesetzt werden.

Geeignete Polycarbonsäuren sind beispielsweise Bernsteinsäure, Adipinsäure, Korksäure, Azelainsäure, Sebacinsäure, Glutarsäure, Glutarsäureanhydrid, Phthalsäure, Isophthalsäure, Terephthalsäure, Trimellithsäure, Phthalsäureanhydrid, Tetrahydrophthalsäureanhydrid, Hexahydrophthalsäureanhydrid, Tetrachlorphthalsäureanhydrid, Endomethylentetrahydrophthalsäureanhydrid, Glutarsäureanhydrid, Maleinsäure, Maleinsäureanhydrid, Fumarsäure, Dimerfettsäuren oder Trimerfettsäuren oder Gemische aus zwei oder mehr davon. Gegebenenfalls können untergeordnete Mengen an monofunktionellen Fettsäuren im Reaktionsgemisch vorliegen.

Als Diole zur Herstellung eines als Basis-Polymeres einsetzbaren Polyesters oder Polycarbonats können eine Vielzahl von Polyolen eingesetzt werden. Beispielsweise sind dies aliphatische Polyole mit 2 bis 4 OH-Gruppen pro Molekill. Die OH-Gruppen können sowohl primär als auch sekundär gebunden sein. Zu den geeigneten aliphatischen Polyolen zählen beispielsweise Ethylenglykol, Propandiol-1,2, Propandiol-1,3, Butandiol-1,4, Butandiol-1,3, Butandiol-2,3, Butendiol-1,4, Butindiol-1,4, Pentandiol-1,5, sowie die isomeren Pentandiole, Pentendiole oder Pentindiole oder Gemische aus zwei oder mehr davon, Hexandiol-1,6, sowie die isomeren Hexandiole, Hexendiole oder Hexindiole oder Gemische aus zwei oder mehr davon, Heptandiol-1,7 sowie die isomeren Heptan-, Hepten- oder Heptindiole, Octandiol-1,8 sowie die isomeren Octan-, Octen- oder Octindiole, und die höheren Homologen oder Isomeren der genannten Verbindung, wie sie sich für den Fachmann aus einer schrittweisen Verlängerung der Kohlenwasserstoffkette um jeweils eine CH₂-Gruppe oder unter Einführung von Verzweigungen in die Kohlenstoffkette ergeben, oder Gemische aus zwei oder mehr davon.

Ebenfalls geeignet sind höherfunktionelle Alkohole wie beispielsweise Glycerin, Trimethylolpropan, Pentaerythrit oder Zuckeralkohole wie Sorbit oder Glucose, sowie oligomere Ether der genannten Substanzen mit sich selbst oder im Gemisch aus zwei oder mehr der genannten Verbindungen untereinander, beispielsweise Polyglycerin mit einem Polymerisationsgrad von etwa 2 bis etwa 4. Bei den höherfunktionellen Alkoholen können eine oder mehr OH-Gruppen mit monofunktionellen Carbonsäuren mit 1 bis 20 C-Atomen verestert sein, mit der Maßgabe, daß im Durchschnitt wenigstens zwei OH-Gruppen erhalten bleiben. Die genannten höherfunktionellen Alkohole können in reiner Form oder, soweit möglich, als die im Rahmen ihrer Synthese erhältlichen technischen Gemische eingesetzt werden.

Weiterhin können als Polyolkomponente zur Herstellung der Basis-Polymeren die Umsetzungsprodukte niedermolekularer, polyfunktioneller Alkohole mit Alkylenoxiden, sogenannte Polyetherpolyole, eingesetzt werden. Polyetherpolyole, die zur Herstellung von als Basis-Polymeren geeigneten Polyestern eingesetzt werden sollen, werden vorzugsweise durch Umsetzung von Polyolen mit Alkylenoxiden erhalten. Die Alkylenoxide weisen vorzugsweise zwei bis etwa vier C-Atome auf. Geeignet sind beispielsweise die Umsetzungsprodukte von Ethylenglykol, Propylenglykol, den isomeren Butandiolen oder Hexandiolen, wie oben genannt, oder Gemischen aus zwei oder mehr davon, mit Ethylenoxid, Propylenoxid oder Butylenoxid oder Gemischen aus zwei oder mehr davon. Ferner sind auch die Umsetzungsprodukte polyfunktioneller Alkohole wie Glycerin, Trimethylolethan oder Trimethylolpropan, Pentaerythrit oder Zuckeralkohole oder Gemischen aus zwei oder mehr davon, mit den genannten Alkylenoxiden zu Polyetherpolyolen geeignet. Besonders geeignet sind aus den genannten Umsetzungen erhältliche Polyetherpolyole mit einem Molekulargewicht (Mₙ) von 100 bis 3.000, vorzugsweise von 200 bis 2.000. Die genannten Polyetherpolyole können mit den oben genannten Polycarbonsäuren in einer Polykondensationsreaktion zu den als Basis-Polymeren einsetzbaren Polyestern umgesetzt werden.

Ebenfalls als Basis-Polymere mit terminalen OH-Gruppen geeignet sind Polyetherpolyole, wie sie beispielsweise in der oben geschilderten Weise entstehen. Polyetherpolyole werden üblicherweise durch Umsetzung einer Startverbindung mit mindestens zwei reaktiven Wasserstoffatomen mit Alkylen- oder Arylenoxiden, beispielsweise Ethylenoxid, Propylenoxid, Butylenoxid, Styroloxid, Tetrahydrofuran oder Epichlorhydrin oder Gemischen aus zwei oder mehr davon, erhalten.

Geeignete Startverbindungen sind beispielsweise Wasser, Ethylenglykol, Propylenglykol-1,2 oder -1,3, Butylenglykol-1,4, oder -1,3, Hexandiol-1,6, Octandiol-1,8, Neopentylglykol, 1,4-Hydroxymethylcyclohexan, 2-Methyl-1,3-Propandiol, Glycerin, Trimethylolpropan, Hexantriol-1,2,6, Butantriol-1,2,4, Trimethylolethan, Pentaerythrit, Mannitol, Sorbitol, Methylglykoside, Zucker, Phenol, Isononylphenol, Resorcin, Hydrochinon, 1,2,2- oder 1,1,2-Tris-(Hydroxyphenyl)-Ethan, Ammoniak, Methylamin, Ethylendiamin, Tetra- oder Hexamethylenamin, Triethanolamin, Anilin, Phenylendiamin, 2,4- und 2,6-Diaminotoluol und Polyphenylpolymethylenpolyamine, wie sie sich durch Anilin-Formaldehydkondensation erhalten lassen.

Ebenfalls zum Einsatz als Basiskomponente geeignet sind Polyetherpolyole, die durch Vinylpolymere modifzieit wurden. Derartige Produkte sind beispielsweise erhältlich, in dem Styrol- oder Acrylnitril oder deren Gemisch in Gegenwart von Polyethern polymerisiert wird.

Ein im Rahmen der vorliegenden Erfindung besonders zum Einsatz als Basis-Polymeres geeignetes Polyetherpolyol ist Polypropylenglykol mit einem Molekulargewicht von 300 bis 1.500.

Ebenfalls als Basis-Polymeres oder als Polyolkomponente zur Herstellung des Basis-Polymeren geeignet sind Polyacetale. Unter Polyacetalen werden Verbindungen verstanden, wie sie durch Umsetzung von Glykolen, beispielsweise Diethylenglykol oder Hexandiol, mit Formaldehyd erhältlich sind. Im Rahmen der Erfindung einsetzbare Polyacetale können auch durch die Polymerisation cyclischer Acetale erhalten werden.

Weiterhin als Basis-Polymere oder als Polyole zur Herstellung der Basis-Polymeren geeignet, sind Polycarbonate. Polycarbonate können beispielsweise durch die Reaktion der oben genannten Polyole, insbesondere von Diolen wie Propylenglykol, Butandiol-1,4 oder Hexandiol-1,6, Diethylenglykol, Triethylenglykol oder Tetraethylenglykol oder Gemischen aus zwei oder mehr davon, mit Diarylcarbonaten, beispielsweise Diphenylcarbonat oder Phosgen, erhalten werden.

Ebenfalls als Basis-Polymere oder als Polyolkomponente zur Herstellung der Basis-Polymeren geeignet sind OH-Gruppen tragende Polyacrylate. Solche Polyacrylate sind beispielsweise erhältlich durch Polymerisation von ethylenisch ungesättigten Monomeren, die OH-Gruppen tragen. Solche Monomeren sind beispielsweise durch die Veresterung von ethylenisch ungesättigten Carbonsäuren und difunktionellen Alkoholen erhältlich, wobei der Alkohol in der Regel nur in einem leichten Überschuß vorliegt Hierzu geeignete, ethylenisch ungesättigte Carbonsäuren sind beispielsweise Acrylsäure, Methacrylsäure, Crotonsäure oder Maleinsäure. Entsprechende OH-Gruppen tragende Ester sind beispielsweise 2-Hydroxyethylacrylat, 2-Hydroxyethylmethacrylat, 2-Hydroxypropylacrylat, 2-Hydroxypropylacrylat, 2-Hydroxypropylmethacrylat, 3-Hydroxypropylacrylat oder 3-Hydroxypropylmethacrylat oder Gemische aus zwei oder mehr davon.

Gegebenenfalls ist das Molekulargewicht des Basis-Polymeren für den Einsatz als Komponente A zu gering. Eine Erhöhung des Molekulargewichts kann beispielsweise durch Kettenverlängerung erfolgen. Vorteilhafterweise wird hierzu das terminale OH-Gruppen tragende Basis-Polymere zunächst mit einer in Bezug auf die terminalen OH-Gruppen polyfunktionellen, vorzugsweise einer difunktionellen Verbindung umgesetzt.

Als polyfunktionelle Verbindungen im erfindungsgemäßen Sinne eignen sich daher besonders Polyepoxide, insbesondere Diepoxide, oder vorzugsweise Polyisocyanate, insbesondere Diisocyanate. Besonders bevorzugt sind im Rahmen der vorliegenden Erfindung die Diisocyanate. Die zur Erzielung einer bestimmten Molekulargewichtserhöhung erforderlichen stöchiometrischen Verhältnisse zwischen Basis-Polymerem und polyfunktioneller Verbindung sind dem Fachmann bekannt. In der Regel wird es jedoch so sein, daß zum Erzielen einer Kettenverlängerung ein Überschuß an Basis-Polymerem bei der Kettenverlängerungsreaktion vorliegt, wobei die entstehenden, kettenverlängerten Basis-Polymeren wieder terminale OH-Gruppen aufweisen.

Um zum Einsatz als Komponente A geeignet zu sein, müssen die oben genannten, terminale OH-Gruppen aufweisenden, gegebenenfalls kettenverlängerten Basis-Polymere mit mindestens einer durch Bestrahlung mit UV-Licht oder mit Elektronenstrahlen polymerisierbaren funktionellen Gruppe und mindestens einer, durch Reaktion mit einer mindestens ein acides Wasserstoffatom aufweisenden Verbindung polymerisierbaren, funktionellen Gruppe versehen werden.

Hierzu werden die Basis-Polymeren zweckmäßigerweise mit einer in bezug auf die terminalen OH-Gruppen polyfunktionellen, vorzugsweise einer difunktionellen Verbindung umgesetzt. Als polyfunktionelle Verbindungen im erfindungsgemäßen Sinne eignen sich die schon zur Kettenverlängerung einsetzbaren polyfunktionellen Verbindungen, besonders Polyepoxide, insbesondere Diepoxide, vorzugsweise jedoch Polyisocyanate, insbesondere Diisocyanate. Besonders bevorzugt sind im Rahmen der vorliegenden Erfindung die Diisocyanate.

Geeignete polyfunktionelle Polyisocyanate, die zur Umsetzung mit den Basis-Polymeren geeignet sind, enthalten im Durchschnitt zwei bis höchstens etwa vier Isocyanatgruppen. Beispiele für geeignete Isocyanate sind 1,5-Naph-thalindiisocyanat, 4,4'-Diphenylmethandiisocyanat (MDI), hydriertes MDI (Dicyclohexylmethandiisocyanat, H₁₂-MDI), Xylylendiisocyanat (XDI), Tetramethylxylylendiisocyanat (TMXDI), 4,4'-Diphenyldimethylmethandiisocyanat sowie Di- und Tetraalkyldiphenylmethandiisocyanat, 4,4'-Dibenzyldiisocyanat, 1,3-Phenylendiisocyanat, 1,4-Phenylendiisocyanat, 2,4- und 2,6-Toluylendiisocyanat (TDI) und deren Gemische, insbesondere ein Gemisch enthaltend etwa 20 % 2,4-und 80 Gew.-% 2,6-Toluylendi-isocyanat, 1-Methyl-2,4-diisocyanatocyclohexan, 1,6-Diisocyanato-2,2,4-trimethylhexan, 1,6-Diisocyanato-2,4,4-trimethylhexan, 1-Isocyanatomethyl-3-isocyanato,-1,5,5-trimethylcyclohexan (IPDI), chlorierte und bromierte Diisocyanate, phosphorhaltige Diisocyanate, 4,4'-Diisocyanatophenylperfluorethan, Tetramethoxybutan-1,4-diisocyanat, 1,4-Butandiisocyanat, 1,6-Hexandiisocyanat (HDI), Cyclohexan-1,4-diisocyanat, Ethylendiisocyanat, Phthalsäurebisisocyanatoethylester; Polyisocyanate, die reaktive Halogenatome enthalten, wie 1-Chlormethylphenyl-2,4-diisocyanat, 1-Bromethylphenyl-2,6-diisocyanat, 3,3-Bis-chlormethylether-4,4'-diphenyldi-isocyanat. Ebenso einsetzbar sind schwefelhaltige Polyisocyanate, wie sie beispielsweise durch Umsetzung von 2 Mol Hexamethylendiisocyanat mit 1 mol Thiodiglykol oder Dihydroxydihexylsulfid erhältlich sind. Andere Diisocyanate sind Trimethylhexamethylendiisocyanate, 1,4-Diisocyanatobutan, 1,2-Diisocyanatododekan und Dimerfettsäurediisocyanate. Triisocyanatoisocyanurate können durch Trimerisierung von Diisocyanaten bei erhöhten Temperaturen, beispielsweise bei etwa 200° und/oder in Gegenwart eines Katalysators, beispielsweise einem Amin, erhalten werden, und sind ebenfalls im Rahmen der vorliegenden Erfindung einsetzbar. Die genannten Polyisocyanate können im Rahmen der vorliegenden Erfindung einzeln oder als Gemisch aus zwei oder mehr der genannten Polyisocyanate eingesetzt werden. Vorzugsweise wird im Rahmen der vorliegenden Erfindung ein einzelnes Polyisocyanat oder ein Gemisch aus zwei oder drei Polyisocyanaten eingesetzt. Als einzeln oder im Gemisch einzusetzende Polyisocyanate bevorzugt sind HDI, MDI oder TDI, beispielsweise ein Gemisch aus MDI und TDI.
Vorzugsweise wird das Basis-Polymere mit der polyfunktionellen Verbindung, vorzugsweise mit dem Diisocyanat, in einem Verhältnis von 1:>2 umgesetzt, wobei der Überschuß an polyfunktioneller Verbindung beispielsweise gerade so groß gewählt wird, daß eine Kettenverlängerung des Basis-Polymeren vermieden wird aber nur geringe Mengen an nichtumgesetzter polyfunktioneller Verbindung in der Komponente A vorliegen. Insbesondere beim Einsatz eines Diisocyanats als polyfunktionelle Verbindung kann eine solche vorgehensweise vorteilhaft sein. Auf diese Weise erhält man ein Polymeres, das terminal zwei funktionelle Gruppen trägt, die durch Reaktion mit einer mindestens ein acides Wasserstoffatom aufweisenden Verbindung polymerisierbar sind.

Um aus einem solchen Polymeren ein zum Einsatz als Komponente A geeignetes Polymere zu erhalten, setzt man das Polymere zweckmäßigerweise mit einer Verbindung um, die sowohl eine durch Bestrahlung mit UV-Licht oder mit Elektronenstrahlen polymerisierbare funktionelle Gruppe als auch eine zur Reaktion mit der terminalen funktionellen Gruppe am Polymeren geeignete funktionelle Gruppe aufweist. Zu diesem Zweck besonders gut geeignet sind die Hydroxyalkylacrylate oder -methacrylate, d.h. Umsetzungsprodukte der Acrylsäure oder Methacrylsäure mit difunktionellen Alkoholen. Besonders geeignet sind im Rahmen der vorliegenden Erfindung beispielsweise 2-Hydroxyethylacrylat, 2-Hydroxyethylmethacrylat, 2-Hydroxypropylacrylat, 2-Hydroxypropylmethacrylat, 3-Hydroxypropylacrylat oder 3-Hydroxypropylmethacrylat oder Gemische aus zwei oder mehr davon.

Die molaren Verhältnisse zwischen Basis-Polymerem und der Verbindung, die sowohl eine durch Bestrahlung mit UV-Licht oder mit Elektronenstrahlen polymerisierbare funktionelle Gruppe als auch eine zur Reaktion mit der terminalen funktionellen Gruppe am Polymeren fähige funktionelle Gruppe aufweist können bei der Umsetzung in weiten Grenzen variieren. In der Regel gilt, daß ein höherer Anteil an durch Bestrahlung mit UV-Licht oder mit Elektronenstrahlen polymerisierbaren funktionellen Gruppen in der Komponente A zu einer höheren Festigkeit einer Klebeverbindung führt, während ein höherer Anteil an mit einer mindestens ein acides Wasserstoffatom aufweisenden Verbindung reaktiven, funktionellen Gruppen eine höhere Endfestigkeit zur Folge hat.

Setzt man beispielsweise das Basis-Polymere mit der Verbindung, die sowohl eine durch Bestrahlung mit UV-Licht oder mit Elektronenstrahlen polymerisierbare funktionelle Gruppe als auch eine zur Reaktion mit der terminalen funktionellen Gruppe am Polymeren fähige funktionelle Gruppe aufweist, in einem molaren Verhältnis von etwa 1:1 um, so trägt im daraus erhältlichen Polymerengemisch im Mittel jedes Polymermolekül sowohl eine durch Bestrahlung mit UV-Licht oder mit Elektronenstrahlen polymerisierbare funktionelle Gruppe als auch eine mit einer mindestens ein acides Wasserstoffatom aufweisenden Verbindung reaktive, funktionelle Gruppe. Entsprechend lassen sich die Anteile der beiden Typen funktioneller Gruppen im durch eine solche Umsetzung erhältlichen Polymerengemisch jeweils zwischen größer als 0 und kleiner als 100% (bezogen auf funktionelle Gruppen im Sinne der vorliegenden Erfindung) variieren. Gute Ergebnisse lassen sich beispielsweise erhalten, wenn etwa 1 bis etwa 50% der im Polymeren als terminale Gruppen vorliegenden funktionellen Gruppen durch Bestrahlung mit UV-Licht oder mit Elektronenstrahlen polymerisierbare funktionelle Gruppen sind, vorzugsweise etwa 5 bis etwa 30%, und besonders bevorzugt etwa 8 bis etwa 15%.

Zum Einsatz in Komponente A geeignete Polymere lassen sich beispielsweise auch in mehreren Schritten dadurch erhalten, daß man in einem ersten Schritt das terminale OH-Gruppen tragende Basis-Polymere mit einer Verbindung umsetzt, die sowohl eine durch Bestrahlung mit UV-Licht oder mit Elektronenstrahlen polymerisierbare funktionelle Gruppe als auch eine zur Reaktion mit der terminalen OH-Gruppe am Basis-Polymeren befähigte funktionelle Gruppe aufweist. Eine solche Verbindung ist beispielsweise Styrolisocyanat. Weitere derartige Verbindungen lassen sich beispielsweise durch Umsetzung einer etwa äquimolaren Menge eines Hydroxyalkylacrylats oder -methacrylats mit einem Diisocyanat erhalten. Nach Umsetzung einer etwa äquimolaren Menge des (gegebenenfalls durch Kettenverlängerung an das zum Einsatz in Komponente A geforderte Molekulargewicht angepaßten) Basis-Polymeren mit einer derartigen Verbindung in einem zweiten Schritt entsteht ein Polymeres, das terminal sowohl eine OH-Gruppe als auch eine durch Bestrahlung mit UV-Licht oder mit Elektronenstrahlen polymerisierbare funktionelle Gruppe aufweist. Setzt man dieses Polymere beispielsweise mit einem Diisocyanat um, so erhält man ein Polymeres, das zum Einsatz in Komponente A geeignet ist
Es ist ebenfalls möglich, die beiden oben genannten Schritte zusammenzufassen, indem man ein Basis-Polymeres, ein Diisocyanat (oder gegebenenfalls eine andere polyfunktionelle Verbindung im Sinne des oben gesagten) und eine Verbindung, die sowohl eine durch Bestrahlung mit UV-Licht oder mit Elektronenstrahlen polymerisierbare funktionelle Gruppe als auch eine zur Reaktion mit der terminalen OH-Gruppe am Basis-Polymeren befähigte funktionelle Gruppe aufweist, in einem geeigneten molaren Verhältnis miteinander umsetzt, so daß die Anteile der beiden Typen funktioneller Gruppen im durch eine solche Umsetzung erhältlichen Polymerengemisch jeweils zwischen größer als 0% und kleiner als 100% (bezogen auf funktionelle Gruppen) variieren. Gute Ergebnisse lassen sich beispielsweise erhalten, wenn etwa 1 bis etwa 50% der im Polymeren als terminale Gruppen vorliegenden funktionellen Gruppen durch Bestrahlung mit UV-Licht oder mit Elektronenstrahlen polymerisierbare funktionelle Gruppen sind, vorzugsweise etwa 5 bis etwa 30%, und besonders bevorzugt etwa 8 bis etwa 15%.

Typische, zum Einsatz in Komponente A geeignete Polymere weisen bei für typische Anwendungen geeigneten Verarbeitungstemperaturen eine Viskosität von 1000 mPas bis 10.000 mPas, insbesondere 3.000 mPas bis 7000 mPas (Brookfield CAP 2000, 25-150°C, Kegel 6, 50 Upm, Meßzeit 25 s) auf. Typische Verarbeitungstemperaturen sind beispielsweise etwa 25 bis etwa 70°C bei der Herstellung flexibler Verpackungsfolien (flexible packaging), etwa 70 bis etwa 80°C bei der Kaschierung von Hochglanzfolien und etwa 80 bis etwa 150°C bei Anwendungen im Textilbereich.

Typische NCO-Werte für zum Einsatz in Komponente A geeignete Polymere sind etwa 2,5 Gew.-% bis etwa 7 Gew.-%, insbesondere etwa 3,5 Gew.-% bis etwa 5 Gew.-%.

Die im Rahmen der vorliegenden Erfindung eingesetzte Komponente A kann nur aus einem der beschriebenen Polymeren bestehen, sie kann jedoch vorteilhafterweise ein Gemisch aus zwei oder mehr der genannten Polymeren darstellen. So ist es beispielsweise vorteilhaft, wenn als Basis-Polymeres ein Gemisch aus einem oder mehreren Polyesterpolyolen und einem oder mehreren Polyetherpolyolen eingesetzt wird. Die verschiedenen Basis-Polymeren können sich dabei beispielsweise im Molekulargewicht (Mₙ) oder im chemischen Aufbau, oder in beidem, unterscheiden.

In einer bevorzugten Ausführungsform der Erfindung werden zur Herstellung der Komponente A als Basis-Polymere etwa 20 bis etwa 40 Gew.-% Polyesterpolyole und etwa 20 bis etwa 60 Gew.-% Polyetherpolyole, bezogen auf die gesamte Komponente A, eingesetzt. In einer weiteren bevorzugten Ausführungsform werden neben einem Polyesterpolyol noch mindestens zwei unterschiedliche Polyetherpolyole als Basis-Polymere eingesetzt, insbesondere ein Gemisch aus einem Polyetherpolyol mit einem Molekulargewicht von etwa 800 bis etwa 1.500 und einem Polyetherpolyol mit einem Molekulargewicht von etwa 300 bis etwa 700.

Zur Herstellung der Komponente A können, wie oben beschrieben, die einzelnen Basis-Polymeren so mit funktionellen Gruppen ausgestattet und gegebenenfalls kettenverlängert werden, daß sie direkt zum Einsatz als Komponente A geeignet sind. In einer bevorzugten Ausführungsform der Erfindung wird jedoch ein Gemisch aus OH-Gruppen tragenden Basis-Polymeren zunächst mit einer geeigneten Menge an Polyisocyanaten umsetzt und anschließend mit Verbindungen, die sowohl eine durch Bestrahlung mit UV-Licht oder mit Elektronestrahlen polymerisierbare funktionelle Gruppe als auch eine zur Reaktion mit der terminalen OH-Gruppe am Basis-Polymeren befähigte funktionelle Gruppe aufweisen, in einem geeigneten molaren Verhältnis zur Reaktion gebracht.

Als Komponente B enthalten die erfindungsgemäßen Klebstoffe mindestens eine Verbindung mit einem Molekulargewicht von 100 bis 8000, die mindestens zwei durch Bestrahlung mit UV-Licht oder mit Elektronenstrahlen polymerisierbare funktionelle Gruppen aufweist.

Als Komponente B sind besonders di- oder höherfunktionelle Acrylat- oder Methacrylatester geeignet. Solche Acrylat- oder Methacrylatester umfassen beispielsweise Ester der Acrylsäure oder Methacrylsäure mit aromatischen, aliphatischen oder cycloaliphatischen Polyolen oder Acrylatester von Polyetheralkoholen.

Als Polyole zur Herstellung eines als Komponente B einsetzbaren Acrylat- oder Methacrylatesters können eine Vielzahl von Polyolen eingesetzt werden. Beispielsweise sind dies aliphatische Polyole mit 2-4 OH-Gruppen pro Molekül und 2 bis etwa 40 C-Atomen. Die OH-Gruppen können sowohl primär als auch sekundär gebunden sein. Zu den geeigneten aliphatischen Polyolen zählen beispielsweise Ethylenglykol, Propandiol-1,2, Propandiol-1,3, Butandiol-1,4, Butandiol-1,3, Butandiol-2,3, Butendiol-1,4, Butindiol-1,4, Pentandiol-1,5, sowie die isomeren Pentandiole, Pentendiole oder Pentindiole oder Gemische aus zwei oder mehr davon, Hexandiol-1,6, sowie die isomeren Hexandiole, Hexendiole oder Hexindiole oder Gemische aus zwei oder mehr davon, Heptandiol-1,7 sowie die isomeren Heptan-, Hepten- oder Heptindiole, Octandiol-1,8 sowie die isomeren Octan-, Octen- oder Octindiole, und die höheren Homologen oder Isomeren der genannten Verbindung, wie sie sich für den Fachmann aus einer schrittweisen Verlängerung der Kohlenwasserstoffkette um jeweils eine CH₂-Gruppe oder unter Einführung von Verzweigungen in die Kohlenstonkette ergeben, oder Gemische aus zwei oder mehr davon.

Ebenfalls geeignet sind höherfunktionelle Alkohole wie beispielsweise Glycerin, Trimethylolpropan, Pentaerythrit oder Zuckeralkohole wie Sorbit oder Glucose, sowie oligomere Ether der genannten Substanzen mit sich selbst oder im Gemisch aus zwei oder mehr der genannten Verbindungen untereinander, beispielsweise Polyglycerin mit einem Polymerisationsgrad von 2 bis 4. Bei den höherfunktionellen Alkoholen können eine oder mehr OH-Gruppen mit monofunktionellen Carbonsäuren mit 1 bis 20 C-Atomen verestert sein, mit der Maßgabe, daß im Durchschnitt wenigstens zwei OH-Gruppen erhalten bleiben. Die genannten höherfunktionellen Alkohole können in reiner Form oder, soweit möglich, als die im Rahmen ihrer Synthese erhältlichen technischen Gemische eingesetzt werden.

Weiterhin können als Polyolkomponente zur Herstellung der Acrylat- oder Methacrylatester die Umsetzungsprodukte niedermolekularer, polyfunktioneller Alkohole mit Alkylenoxiden, sogenannte Polyetherpolyole, eingesetzt werden. Polyetherpolyole, die zur Herstellung von als Basis-Polymeren geeigneten Polyestern eingesetzt werden sollen werden vorzugsweise durch Umsetzung von Polyolen mit Alkylenoxiden erhalten. Die Alkylenoxide weisen vorzugsweise zwei bis etwa vier C-Atome auf. Geeignet sind beispielsweise die Umsetzungsprodukte von Ethylenglykol, Propylenglykol, den isomeren Butandiolen oder Hexandiolen, wie oben genannt, oder Gemischen aus zwei oder mehr davon, mit Ethylenoxid, Propylenoxid oder Butylenoxid oder Gemischen aus zwei oder mehr davon. Ferner sind auch die Umsetzungsprodukte polyfunktioneller Alkohole wie Glycerin, Trimethylolethan oder Trimethylolpropan, Pentaerythrit oder Zuckeralkohole oder Gemischen aus zwei oder mehr davon, mit den genannten Alkylenoxiden zu Polyetherpolyolen geeignet. Besonders geeignet sind aus den genannten Umsetzungen erhältliche Polyetherpolyole mit einem Molekulargewicht (Mₙ) von 100 bis 2000, vorzugsweise von 150 bis 1500, insbesondere von 150 bis 800.

Acrylatester aliphatischer Diole mit 2 bis etwa 40 Kohlenstoffatomen umfassen beispielsweise Neopentylglykoldi(meth)acrylat, 1,6-Hexandioldi(meth)acrylat, Trimethylolpropantri(meth)acrylat, Pentaerythrittetra(meth)acrylat, sowie (Meth)acrylatester des Sorbits und anderer Zuckeralkohole. Diese (Meth)acrylatester von aliphatischen oder cycloaliphatischen Diolen können mit einem aliphatischen Ester oder einem Alkylenoxid modifiziert werden. Die durch einen aliphatischen Ester modifizierten Acrylate umfassen beispielsweise Neopentylglykolhydroxypivalatdi(meth)acrylat, Caprolacton-modifizierte Neopentylglykolhydroxypivalatdi(meth)acrylate und dergleichen. Die Alkylenoxidmodifizierten Acrylatverbindungen umfassen beispielsweise Ethylenoxid-modifizierte Neopentylglykoldi(meth)acrylate, Propylenoxid-modifizierte Neopentylglykoldi(meth)acrylate, Ethylenoxid-modifizierte 1,6-Hexandioldi(meth)acrylate oder Propylenoxid-modifizierte 1,6-Hexandioldi(meth)acrylate oder Gemische aus zwei oder mehr davon.

Auf Polyetherpolyolen aufgebaute Acrylatmonomere umfassen beispielsweise Neopentylglykol-modifizierte Trimethylolpropandi(meth)acrylate, Polyethylenglykoldi(meth)acrylate, Polypropylenglykoldi(meth)acrylate und dergleichen. Triund höherfunktionelle Acrylatmonomere umfassen beispielsweise Trimethylolpropantri(meth)acrylat, Pentaerythritoltri(meth)acrylat, Dipentaerythritoltetra(meth)acrylat, Dipentaerytrhitolpenta(meth)acrylat, Dipentaerythritolhexa(meth)acrylat, Caprolacton-modifiziertes Dipentaerythritolhexa(meth)acrylat, Pentaerythritoltetra(meth)acrylat, Tris[(meth)acryloxyethyl]isocyanurat, Caprolacton-modifizierte Tris[(meth)acryloxyethyl]isocyanurate oder Trimethylolpropantetra(meth)acrylat oder Gemische aus zwei oder mehr davon.

Unter den genannten Di-, Tri- oder höherfunktionellen Acrylatmonomeren, die erfindungsgemäß als Komponente B einsetzbar sind, sind Tripropylenglykoldiacrylat, Neopentylglykolpropoxylatdi(meth)acrylat, Trimethylolpropantri(meth)acrylat und Pentaerythritoltriacrylat bevorzugt.

Die erfindungsgemäßen Klebstoffe enthalten die Komponente A in einer Menge von 10 bis 99,9 Gew.-%, vorzugsweise 15 bis 99 Gew.-%, und Komponente B in einer Menge von 90 bis 0,1 Gew.-%, vorzugsweise 85 bis 1 Gew.-%, bezogen auf die Summe der Komponenten A und B.

Zusätzlich zu Komponente A und Komponente B kann der Klebstoff als Komponente C mindestens einen Photoinitiator enthalten, der unter UV-Bestrahlung eine Polymerisation olefinisch ungesättigter Doppelbindungen initiiert.

Als Komponente C wird daher in der Regel ein Photoinitiator eingesetzt, der bei Bestrahlung mit Licht eine Wellenlänge von etwa 260 bis etwa 480 nm dazu in der Lage ist, eine radikalische Polymerisation olefinisch ungesättigter Doppelbindungen zu initiieren. Im Rahmen der vorliegenden Erfindung sind zum Einsatz als Komponente C grundsätzlich alle handelsüblichen Photoinitiatoren geeignet, die mit dem erfindungsgemäßen Klebstoff kompatibel sind, d. h. wenigstens weitgehend homogene Gemische ergeben.

Beispielsweise sind dies alle Norrish-Type I fragmentierenden Substanzen. Beispiele hierfür sind Benzophenon, Campherchinon, Quantacure (Hersteller: International Bio-Synthetics), Kayacure MBP (Hersteller Nippon Kayaku), Esacure BO (Hersteller: Fratelli Lamberti), Trigonal 14 (Hersteller: Akzo), Photoinitiatoren der Irgacure®-, Darocure®- oder Speedcure®-Reihe (Hersteller: Ciba-Geigy), Darocure® 1173 und/oder Fi-4 (Hersteller: Eastman). Insbesondere geeignet sind darunter Irgacure® 651, Irgacure® 369, Irgacure® 184, Irgacure® 907, Irgacure® 1850, Irgacure® 1173 (Darocure® 1173), Irgacure® 1116, Speedcure® EDB, Speedcure® ITX, Irgacure® 784 oder Irgacure® 2959 oder Gemische aus zwei oder mehr davon. Weiterhin geeignet ist 2,4,6-Trimethylbenzoldiphenylphosphinoxid (Lucirin TPO, Hersteller: BASF AG), das auch im Gemisch mit einem oder mehreren der oben genannten Photoinitiatoren eingesetzt werden kann.

Herkömmliche niedermolekulare Photoinitiatoren können in Verbundwerkstoffen zur Migratbildung beitragen. Als Migrate kommen dabei die im Klebstoff enthaltenen Photoinitiatoren selbst in Frage, eine weitere Migratquelle stellen jedoch auch Fragmente der Photoinitiatoren dar, wie sie gegebenenfalls bei der Bestrahlung des Klebstoffs mit UV-Strahlen entstehen. Unter bestimmten Umständen, beispielsweise bei der Herstellung von Verbundwerkstoffen, die der Lebensmittelverpackung dienen sollen, wird eine möglichst weitgehende Vermeidung von migratfahigen Verbindungen im Klebstoff angestrebt. Der Gehalt des erfindungsgemäßen Klebstoffs an migratfähigen Verbindungen läßt sich in der Regel noch weiter senken, wenn der Photoinitiator ein Molekulargewicht aufweist, das eine Migration weitgehend erschwert, oder sogar unterbindet.

Im Rahmen einer bevorzugten Ausführungsform enthält Komponente C daher wenigstens anteilig einen Photoinitiator, der ein Molekulargewicht von mehr als etwa 200 aufweist Kommerziell erhältliche Photoinitiatoren, die diese Bedingung erfüllen sind beispielsweise Irgacure® 651, Irgacure® 369, Irgacure® 907, Irgacure® 784, Speedcure® EDB, oder Speedcure® ITX.

Photoinitiatoren die bezüglich ihres Molekulargewichts die oben genannte Bedingung erfüllen, sind jedoch auch durch Umsetzung eines niedermolekularen Photoinitiators der eine gegenüber Isocyanaten reaktive funktionelle Gruppe aufweist, beispielsweise eine Aminogruppe oder eine OH-Gruppe, mit einer hochmolekularen Verbindung mit wenigstens einer Isocyanatgruppe erhältlich (polymergebundene Photoinitiatoren). Vorzugsweise werden als Komponente Verbindungen eingesetzt, die mehr als ein Photoinitiatormolekül tragen, beispielsweise zwei, drei oder mehr Photoinitiatormoleküle. Solche Verbindungen lassen sich beispielsweise durch Umsetzung eines polyfunktionellen Alkohols mit zwei oder mehr OH-Gruppen mit geeigneten Di- oder Triisocyanaten und Photoinitiatoren mit einer geeigneten, gegenüber Isocyanaten reaktiven funktionellen Gruppe, erhalten.

Als polyfunktionelle Alkohole sind alle vorstehend genannten polyfunktionellen Alkohole einsetzbar, insbesondere jedoch Neopentylglykol, Glycerin, Trimethylolpropan, Pentaerythrit und deren Alkoxylierungsprodukte mit C₂₋₄-Alkylenoxiden. Ebenfalls als polyfunktionelle Alkohole geeignet, und im Rahmen der vorliegenden Erfindung besonders bevorzugt, sind die Umsetzungsprodukte dreiwertiger Alkohole mit Caprolacton, beispielsweise das Umsetzungsprodukt von Trimethylolpropan mit Caprolacton (Capa 305, Fa. Interox, Cheshire, UK, Molekulargewicht (Mₙ) = 540).

In einer bevorzugten Ausführungsform der Erfindung enthält Komponente C einen Photoinitiator, der erhältlich ist, indem ein mindestens dreiwertiger Alkohol mit Caprolacton zu einem mindestens drei OH-Gruppen tragenden Polycaprolacton mit einem Molekulargewicht von 300 bis 900 umgesetzt wird, und anschließend das Polycaprolacton mittels einer mindestens zwei Isocyanatgruppen tragenden Verbindung mit 1-[4-(2-Hydroxyethoxy)phenyl]-2-hydroxy-2-methylpropan-1-on verknüpft wird.

Als mindestens zwei Isocyanatgruppen tragende Verbindungen, insbesondere als Diisocyanate zur Umsetzung mit den genannten Polyolen kommen beispielsweise alle im Rahmen dieses Textes genannten Diisocyanate in Frage. Besonders bevorzugt sind jedoch das 2,4- und das 2,6-Isomere des Toluylendiisocyanats (TDI), wobei die Isomeren in ihrer reinen Form oder als Gemisch eingesetzt werden können.

Als Photoinitiatoren zur Herstellung der polymergebundenen Photoinitiatoren eignen sich alle Photoinitiatoren, die eine gegenüber Isocyanatgruppen reaktive funktionelle Gruppe aufweisen. Besonders bevorzugt ist im Rahmen der vorliegenden Erfindung 1-[4-(2-Hydroxyethoxy)phenyl]-2-hydroxy-2-methylpropan-1-on (Irgacure® 2959), das über eine primär gebundene OH-Gruppe verfügt.

Gegebenenfalls können die in Komponente C einsetzbaren Photoinitiatoren auch hergestellt werden, indem eine untergeordnete Menge an gegenüber Isocyanatgruppen reaktiven Photoinitiatormolekülen bei der Herstellung der Komponente A oder der Komponente B oder bei beiden Herstellungsverfahren mit eingesetzt werden. Dies führt zu einer Anbindung des Photoinitiators an ein Molekül der Komponente A oder der Komponente B.

Es ist weiterhin möglich, die Anbindung des Photoinitiators an eine Polymerkette, beispielsweise an Komponente A, dadurch zu erreichen, daß der über eine entsprechende funktionelle Gruppe verfügende Photoinitiator in monomerer Form dem Klebstoff zugegeben wird, und anschließend, etwa während einer Lagerzeit des Klebstoffs, mit einer entsprechenden polymeren Komponente, beispielsweise Komponente A, reagiert.

Außerdem ist es möglich, den Photoinitiator rnit einer durch Bestrahlung mit UV-Licht oder mit Elektronenstrahlen polymerisierbaren funktionellen Gruppe zu versehen, wobei die mit UV-Licht oder mit Elektronenstrahlen polymerisierbare funktionelle Gruppe beispielsweise über eine Umsetzung des Photoinitiators mit einer ungesättigten Carbonsäure mit dem Photoinitiator verbunden werden kann. Als ungesättigte Carbonsäure eignen sich beispielsweise Acrylsäure oder Methacrylsäure. Besonders geeignet sind im Rahmen der vorliegenden Erfindung die Umsetzungsprodukte von Irgacure® 2959 mit Acrylsäure oder Methacrylsäure.

Es ist demnach möglich, daß als Komponente C eine Verbindung eingesetzt wird, die sowohl einen Photoinitiator als auch eine durch Bestrahlung mit UV-Licht oder mit Elektronenstrahlen polymerisierbare funktionelle oder eine zur Reaktion mit einer mindestens ein acides Wasserstoffatom aufweisenden Verbindung fähige, funktionelle Gruppe, oder beides, aufweist.

Der erfindungsgemäße Klebstoff enthält die Komponente C in einer Menge von bis zu 25 Gew.-% bezogen auf den gesamten Klebstoff, die Untergrenze sollte bei etwa 0,01 Gew.-% liegen. Bezogen auf das einzelne Photoinitiatormolekül selbst, unabhängig davon, ob es an eine weitere Verbindung kovalent gebunden ist, sollte der Anteil am Klebstoff bei mindestens 0,01 Gew.-% bis zu 10 Gew.-% liegen, bevorzugt ist ein Anteil von 0,5 bis 5 Gew.-% und besonders bevorzugt 1 bis 3 Gew.-%, bezogen auf den gesamten Klebstoff.

In einer bevorzugten Ausführungsform kann der erfindungsgemäße Klebstoff als monofunktionellen Reaktiwerdünner noch mindestens eine Verbindung aufweisen, die nur über eine durch Bestrahlung mit UV-Licht oder mit Elektronenstrahlen polymerisierbare funktionelle Gruppe verfügt und ansonsten keine weiteren im Sinne der Komponenten A, B oder C reaktiven Gruppen aufweist. Hierzu eignen sich besonders solche Verbindungen, die bei Raumtemperatur fließfähig sind, insbesondere entsprechende Ester der Acrylsäure oder Methacrylsäure. Besonders geeignete Verbindungen sind beispielsweise die Acrylsäure- oder Methacrylsäureester der aromatischen oder aliphatischen, linearen oder verzweigten C₄₋₂₀-Monoalkohole oder von entsprechenden Etheralkoholen, beispielsweise n-Butylacrylat, 2-Ethylhexylacrylat, 3-Methoxybutylacrylat, 2-Phenoxyethylacrylat, Benzylacrylat oder 2-Methoxypropylacrylat.

Die monofunktionellen Reaktivverdünner stellen im Klebstoff einen Anteil von bis zu 50 Gew.-%, vorzugsweise jedoch darunter, beispielsweise 40 Gew.-%, 30 Gew.-% oder 20 Gew.-%. Die Verwendung geringerer Mengen ist ebenso möglich, so kann der erfindungsgemäße Klebstoff auch nur 10 Gew.-% oder Menge von 0,5 bis 8 Gew.-% an monofunktionellem Reaktivverdünner enthalten.

Der erfindungsgemäße Klebstoff kann nach Abschluß einer ersten Aushärtungsstufe durch Bestrahlung mit beispielsweise Elektronenstrahlen oder UV-Strahlen (in Verbindung mit einem entsprechenden Photoinitiator als Komponente C) durch den Einfluß von Luftfeuchtigkeit bis zur geforderten Endfestigkeit aushärten. Wenn jedoch ein schnelles Erreichen einer bestimmten Endfestigkeit, d.h., eine hohe Härtungsgeschwindigkeit gefordert ist, beispielsweise um eine möglichst zügige Weiterverarbeitung der verklebten Materialien zu ermöglichen, kann die auf Härtung durch Luftfeuchtigkeit beruhende Härtungsgeschwindigkeit zu gering sein. In solchen Fällen kann dem Klebstoff vor der Verarbeitung ein Härter als Komponente D zugesetzt werden.

Gegenstand der Erfindung ist daher auch ein Klebstoff, der
(d) als Komponente D eine Verbindung mit mindestens zwei aciden Wasserstoffatomen
enthält.

Als Komponente D wird vorzugsweise eine Verbindung mit mindestens zwei funktionellen Gruppen mit jeweils mindestens einem aciden Wasserstoffatom, oder ein Gemisch aus zwei oder mehr solcher Verbindungen, eingesetzt, die mit den entsprechenden funktionellen Gruppe der Komponente A reagieren können. Unter den entsprechenden funktionellen Gruppen der Komponente A werden im Rahmen des vorliegenden Textes alle in Komponente A vorliegenden funktionellen Gruppen verstanden, die unter den erfindungsgemäßen Bedingungen nicht durch Bestrahlung polymerisierbar sind, insbesondere Isocyanatgruppen.

Die als Komponente D einsetzbaren Verbindungen weisen vorzugsweise ein Molekulargewicht von bis zu 2.500 auf. Als mit den entsprechenden funktionellen Gruppen der Komponente A reaktionsfähige funktionellen Gruppen mit mindestens einem aciden Wasserstoffatom eignen sich insbesondere primäre oder sekundäre Aminogruppen, Mercaptogruppen oder OH-Gruppen. Die als Komponente D einsetzbaren Verbindungen können Aminogruppen, Mercaptogruppen oder OH-Gruppen jeweils ausschließlich, oder im Gemisch aufweisen.

Die Funktionalität der in Komponente D einsetzbaren Verbindungen beträgt in der Regel mindestens etwa zwei. Vorzugsweise weist Komponente D einen Anteil an höherfunktionellen Verbindungen, beispielsweise mit einer Funktionalität von drei, vier oder mehr, auf. Die gesamte (durchschnittliche) Funktionalität der Komponente D beträgt beispielsweise etwa zwei (z.B. wenn nur difunktionelle Verbindungen als Komponente D eingesetzt werden), oder mehr, beispielsweise etwa 2,1, 2,2, 2,5, 2,7, oder 3. Gegebenenfalls kann Komponente D eine noch höhere Funktionalität aufweisen, beispielsweise etwa vier oder mehr.

Vorzugsweise enthält Komponente D ein mindestens zwei OH-Gruppen tragendes Polyol. Zum Einsatz in Komponente D sind alle im Rahmen des vorliegenden Textes erwähnten Polyole geeignet, sofern sie das einschränkende Kriterium der Obergrenze des Molekulargewichts erfüllen.

Komponente D wird in der Regel in einer Menge eingesetzt, daß das Verhältnis von mit der Komponente D reaktionsfähigen funktionellen Gruppen der Komponente A zu mit entsprechenden funktionellen Gruppen der Komponente A reaktionsfähigen Gruppen der Komponente D 5:1 bis 1:1, insbesondere 2:1 bis 1:1 beträgt.

Vorzugsweise ist im erfindungsgemäßen Klebstoff als Komponente D eine mindestens zwei OH-Gruppen aufweisende Verbindung enthalten.

Der erfindungsgemäße Klebstoff weist in der Regel bei 50°C eine Viskosität von 1.000 mPas bis 30.000 mPas (Brookfield CAP 200, 50°C, Kegel 6, 50 Upm, Meßzeit 25 s) auf. In bevorzugten Ausführungsformen der Erfindung wird die Viskosität des Klebstoffs so gewählt, daß er bei typischen Verarbeitungstemperaturen eine Viskosität von etwa 1.000 mPas bis etwa 4.000 mPas aufweist (Brookfield CAP 200, 25-150°C, Kegel 6, 50 Upm, Meßzeit 25 s). Typische Verarbeitungstemperaturen sind beispielsweise etwa 25 bis etwa 70°C bei der Herstellung flexibler Verpackungsfolien (flexible packaging), etwa 70 bis etwa 80°C bei der Kaschierung von Hochglanzfolien und etwa 80 bis etwa 150°C bei Anwendungen im Textilbereich.

Gegebenenfalls kann der erfindungsgemäße Klebstoff noch Zusatzstoffe enthalten, die am gesamten Klebstoff einen Anteil von bis zu 49 Gew.-% haben können.

Zu den im Rahmen der vorliegenden Erfindung einsetzbaren Zusatzstoffen zählen beispielsweise Weichmacher, Stabilisatoren, Antioxidantien, Farbstoffe oder Füllstoffe.

Als Weichmacher werden beispielsweise Weichmacher auf Basis von Phthalsäure eingesetzt, insbesondere Dialkylphthalate, wobei als Weichmacher Phthalsäureester bevorzugt sind, die mit einem etwa 6 bis etwa 12 Kohlenstoffatomen aufweisenden, linearen Alkanol verestert wurden. Besonders bevorzugt ist hierbei das Dioctylphthalat.

Ebenfalls als Weichmacher geeignet sind Benzoatweichmacher, beispielsweise Sucrosebenzoat, Diethylenglykoldibenzoat und/oder Diethylenglykolbenzoat, bei dem etwa 50 bis etwa 95% aller Hydroxylgruppen verestert worden sind, Phosphat-Weichmacher, beispielsweise t-Butylphenyldiphenylphosphat, Polyethylenglykole und deren Derivate, beispielsweise Diphenylether von Poly(ethylenglykol), flüssige Harzderivate, beispielsweise der Methylester von hydriertem Harz, pflanzliche und tierische Öle, beispielsweise Glycerinester von Fettsäuren und deren Polymerisationsprodukte.

Zu im Rahmen der Erfindung als Zusatzstoffe einsetzbaren Stabilisatoren oder Antioxidantien, zählen Phenole, sterisch gehinderte Phenole hohen Molekulargewichts (Mₙ), polyfunktionelle Phenole, schwefel- und phosphorhaltige Phenole oder Amine. Im Rahmen der Erfindung als Zusatzstoffe einsetzbare Phenole sind beispielsweise Hydrochinon, Hydrochinonmonomethylether 2,3-(Di-tert.-butyl)hydrochinon, 1,3,5-Trimethyl-2,4,6-tris(3,5-ditert-butyl-4-hydroxybenzyl)benzol; Butylhydroxytoluol (BHT), Pentaerythrittetrakis-3-(3,5-di-tert-butyl-4-hydroxyphenyl)propionat; n-Octadecyl-3,5-di-tert-butyl-4-hydroxyphenyl)propionat; 4,4-Methylenbis(2,6-di-tert-butyl-phenol); 4,4-Thiobis(6-tert-butyl-o-cresol); 2,6-Di-tert-butylphenol; 6-(4-Hydroxyphenoxy)-2,4-bis(n-octyl-thio)-1,3,5-triazin; Di-n-Octadecyl-3,5-di-tert-butyl-4-hydroxybenzylphosphonate; 2-(n-Octylthio)ethyl-3,5-di-tertbutyl-4-hydroxybenzoat; und Sorbithexa[3-(3,5-di-tert-butyl-4-hydroxyphenyl)propionat]; sowie p-Hydroxydiphenylamin oder N,N'-diphenylendiamin oder Phenothiazin.

Weitere Zusatzstoffe können in die erfindungsgemäßen Klebstoffe mit aufgenommen werden, um bestimmte Eigenschaften zu variieren. Darunter können beispielsweise Farbstoffe wie Titandioxid, Füllstoffe wie Talkum, Ton und dergleichen sein. Gegebenenfalls können in den erfindungsgemäßen Klebstoffen geringe Mengen an thermoplastischen Polymeren vorliegen, beispielsweise Ethylenvinylacetat (EVA), Ethylenacrylsäure, Ethylenmethacrylat und Ethylen-n-butylacrylatcopolymere, die dem Klebstoff gegebenfalls zusätzliche Flexibilität, Zähigkeit und Stärke verleihen. Es ist ebenfalls möglich bestimmte hydrophile Polymere zuzugeben, beispielsweise Polyvinylalkohol, Hydroxyethylcellulose, Hydroxypropylcellulose, Polyvinylmethylether, Polyethylenoxid, Polyvinylpyrrolidon, Polyethyloxazoline oder Stärke oder Celluloseester, insbesondere die Acetate mit einem Substitutionsgrad von weniger als 2,5, welche beispielsweise die Benetzbarkeit der Klebstoffe erhöhen.

Der erfindungsgemäße Klebstoff enthält vorzugsweise
- 10 Gew.-% bis 99,9 Gew.-% Komponente A,
- etwa 0,1 Gew.-% bis 90 Gew.-% Komponente B,
- 0 Gew.-% bis 10 Gew.-% Komponente C
- 0 Gew.-% bis 49 Gew.-% Komponente D sowie
- 0 Gew.-% bis 49 Gew.-% Zusatzstoffe,
wobei die Summe der genannten Bestandteile 100 Gew.-% ergibt.

In einer besonders bevorzugten Ausführungsform enthält der erfindungsgemäße Klebstoff vorzugsweise etwa
- 15 Gew.-% bis 99 Gew.-% Komponente A,
- 1 Gew.-% bis 85 Gew.-% Komponente B,
- 0 Gew.-% bis 10 Gew.-% Komponente C
- 0 Gew.-% bis 49 Gew.-% Komponente D sowie
- 0 Gew.-% bis 49 Gew.-% Zusatzstoffe,
wobei die Summe der genannten Bestandteile 100 Gew.-% ergibt.

Die Herstellung der erfindungsgemäßen Klebstoffe kann durch übliche, dem Fachmann im Rahmen der Herstellung von polymeren Mischungen bekannten Techniken erfolgen.

Der erfindungsgemäße Klebstoff wird im Rahmen der vorliegenden Erfindung üblicherweise durch Vermischung der jeweils genannten Komponenten hergestellt.

Grundsätzlich ist der erfindungsgemäße Klebstoff bei der Verklebung unterschiedlichster Materialien verwendbar. Zu den verklebbaren Materialien zählen beispielsweise Holz, Metall, Glas, Pflanzenfasern, Stein, Papier, Cellulosehydrat, Kunststoffe wie Polystyrol, Polyethylen, Polypropylen, Polyethylenterephthalat, Polyvinylchlorid, Copolymere von Vinylchlorid und Vinylidenchlorid, Copolymere von Vinylacetatolefinen, Polyamide, oder Metallfolien, beispielsweise aus Aluminium, Blei oder Kupfer.

Gegenstand der vorliegenden Erfindung ist daher ein Verfahren zur Herstellung von Folienverbunden, die durch das teil- oder vollflächige Verkleben von Folien erhältlich sind.

Der Auftrag der erfindungsgemäßen Klebstoffs auf die zu verklebenden, Folien, kann mit üblicherweise für solche Zwecke eingesetzten Maschinen, beispielsweise mit herkömmlichen Laminiermaschinen erfolgen. Besonders geeignet ist der Auftrag des Klebstoffs im flüssigen Zustand auf eine zu einem Laminat zu verklebende Folie. Die so mit dem Klebstoff beschichtete Folie wird dann anschließend in eine Bestrahlungszone überführt, in der durch Bestrahlung mit ultravioletter Strahlung die Polymerisationsreaktion, das heißt die Vernetzung der einzelnen Komponenten, initiiert wird. Der erfindungsgemäße Klebstoff wird durch die Bestrahlung und die damit verbundene Vernetzungsreaktion der einzelnen im Klebstoff enthaltenen Komponenten klebrig, beispielsweise kontaktklebrig, vorzugsweise jedoch haftklebrig. Nach dem Bestrahlungsvorgang wird die erste, mit dem bestrahlten Klebstoff beschichtete Folie mit mindestens einer zweiten Folie, gegebenenfalls unter Druckanwendung, kaschiert.

Diese Vorgehensweise ist insbesondere dann vorteilhaft, wenn zwei Folien miteinander verklebt werden sollen, die nicht für eine die Initiierung der Polymerisation erforderliche Strahlung durchlässig sind.

Der beschriebene Verklebungs- und Laminiervorgang kann mehrfach wiederholt werden, so daß Laminate hergestellt werden können, die aus mehr als zwei verklebten Schichten bestehen.

Der erfindungsgemäße Klebstoff kann durch alle geeigneten Verfahren auf die zu verklebenden Flächen aufgetragen werden, beispielsweise durch Sprühen oder Rakeln.

Die Erfindung wird nachfolgend durch Beispiele erläutert.

### Beispiele

### Durchführung der Messungen:

Polyesterfolien (Polyethylenterephthalat (PET), Dicke 50 µm) wurden auf eine Größe von etwa 15 x 19 cm zugeschnitten, die Oberfläche wurde anschließend mit Methanol gereinigt. Auf die Hälfte der Folie wurde auf einem zusammenhängenden Gebiet der zu untersuchende Klebstoff aufgerakelt. Anschließend erfolgte die Belichtung des Klebstoffs mit einer UV-Lampe (Ultra Jet 100, Fa. Köhler), die Belichtungszeit betrug eine Sekunde. Direkt im Anschluß an die Belichtung wurde eine zweite Folie deckungsgleich aufgebracht und mit einer Handwalze angedrückt. Der so erhaltene Folienverbund wurde in 3 cm breite Streifen geschnitten und die Verbunddicke wurde gemessen. Die Schichtdicke des Klebstoffs betrug in allen Fällen etwa 30 bis 100 µm. Nach den unter angegebenen Lagerzeiten wurden dann zur Festigkeitsprüfung die Schälwerte bestimmt. Die Messung der Schälwerte erfolgte in Anlehnung an DIN 53539 mit einer Prüfmaschine der Fa. Zwick, Typ 144501/00. Es wurde mit einem 10 kN Kraftaufnehmer bzw. mit einem 0,1 kN Kraftaufnehmer gemessen. Die Prüfgeschwindigkeit betrug 100 mm/min. Die so ermittelten Festigkeiten sind in den einzelnen Beispielen in N/15 mm angegeben.

### Beispiel 1 (Vergleichsbeispiel):

Ein Polymeres mit einer NCO-Zahl von 4,4 Gew.-% (Molekulargewicht (Mₙ) etwa 2000) wurde aus 32 Gew.-% eines Polyesters mit einem Molekulargewicht von etwa 800, 33 Gew.-% eines Polypropylenglykols mit einem Molekulargewicht von etwa 1000, 9 Gew.-% eines Polypropylenglykols mit einem Molekulargewicht von etwa 400, 24 Gew.-% TDI und etwa 5 Gew.-% MDI hergestellt. Die Viskosität betrug etwa 5200 mPas (Brookfield CAP 200, 70°C, Kegel 6, 50 Upm, Meßzeit 25 s). 10% der NCO Gruppen wurden mit Hydroxyethylacrylat umgesetzt. Das so erhältliche Produkt (Komponente A) hatte eine NCO-Zahl von ca. 4,0 und eine Viskosität von etwa 5700 mPas.

Zu 100 Teilen der Komponente A wurde ein Teil Photoinitiator Irgacure® 651 gegeben. Dieses Gemisch wurde anschließend auf Haftung überprüft.

Folgende Werte wurden gemessen:
- nach 30 min 0,03 N/15 mm
- nach 7 Tagen 9 N/15 mm
- nach 14 Tagen 10 N/15 mm

### Beispiel 2 (Erfindungsgemäß):

Komponente A:
   Ein Polymeres mit einer NCO-Zahl von 4,4 Gew.-% (Molekulargewicht (Mₙ) etwa 2000) wurde aus 32 Gew.-% eines Polyesters mit einem Molekulargewicht von etwa 800, 33 Gew.-% eines Polypropylenglykols mit einem Molekulargewicht von etwa 1000, 9 Gew.-% eines Polypropylenglykols mit einem Molekulargewicht von etwa 400, 24 Gew.-% TDI und etwa 5 Gew.-% MDI hergestellt. Die Viskosität betrug etwa 5200 mPas (Brookfield CAP 200, 70°C, Kegel 6, 50 Upm, Meßzeit 25 s). 10% der NCO-Gruppen wurden mit Hydroxyethylacrylat umgesetzt. Das so erhältliche Produkt (Komponente A) hatte eine NCO-Zahl von ca. 4,0 und eine Viskosität von etwa 5700 mPas.
Komponente B: Polyethylenglykol-200-diacrylat
Photoinitiator: Irgacure® 369
   100 Teile der Komponente A wurden mit 5 Teilen Komponente B und 1 Teil Photoinitiator vermischt. Dieses Gemisch wurde anschließend auf Haftung überprüft.
   Folgende Werte wurden gemessen:
   - nach 30 min 0,3 N/15 mm
   - nach 7 Tagen 7 N/15 mm
   - nach 14 Tagen 8 N/15 mm

### Beispiel 3 (Erfindungsgemäß):

Komponente A:
   Zur Herstellung der Komponente A wurde ein im Handel erhältlicher, feuchtigkeitshärtender, NCO-Gruppen haltiger Kaschierklebstoff (LIOFOL UR 7746, Fa. Henkel, Düsseldorf) mit Hydroxyethylacrylat umgesetzt, so daß 10% der NCO-Gruppen zum entsprechenden Urethan reagierten.
Komponente B: Polyethylenglykol-200-diacrylat
Photoinitiator:
   423,74 g Capa 305 (trifunktionelles Polycaprolacton, OH-Zahl = 188,3) wurden mit 391,5 g 2,4-TDI umgesetzt (NCO-Zahl = 12,3%). 107,7 g (0,1 mol) dieses Präpolymeren wurden mit 219,6 g (1,0 mol) Irgacure® 2959 versetzt und so lange umgesetzt, bis die NCO-Zahl auf 0% gefallen war.
   100 Teile der Komponente A wurden mit 5 Teilen Komponente B und 5 Teilen Photoinitiator vermischt. Dieses Gemisch wurde anschließend auf Haftung überprüft.
   Folgende Werte wurden gemessen:
   - nach 30 min 0,4 N/15 mm
   - nach 7 Tagen 5 N/15 mm
   - nach 14 Tagen 7 N/15 mm

### Beispiel 4 (Erfindungsgemäß):

Komponente A:
   Zur Herstellung der Komponente A wurde zunächst ein Acrylatgruppen und terminale NCO-Gruppen aufweisendes Polymeres hergestellt. Hierzu wurden 102 g eines Polyesters (OH-Zahl 134) aus Adipinsäure, Isophthalsäure, 1,2-Propylenglykol und Diethylenglykol, 74,52 g eines Polyesters (OH-Zahl 9, Säurezahl 6) aus Adipinsäure, Isophthalsäure, Ethylenglykol und Diethylenglykol, 22,63 g Propylenglykol (OH-Zahl 105), 53,7 g TDI, 18,59 g MDI und 10,34 g2-Hydroxyethylacrylat miteinander umgesetzt.
Komponente B: Trimethylolpropantriacrylat (TMPTA)
Photoinitiator: 15,27 g Irgacure 907 und 6,11 g Lucirin TPO
   Komponente A wurde mit der angegebenen Menge an Photoinitiator vermischt. Anschließend wurden 100 Gew.-Teile der entstandenen Mischung mit 5 Gew.-Teilen der Komponente B vermischt. Dieses Gemisch wurde anschließend auf Haftung überprüft.
   Folgende Werte wurden gemessen:
   - nach 60 min 2,9 N/15 mm
   - nach 7 Tagen 3,3 N/15 mm

## Patentansprüche

1. Verfahren zur Herstellung von Folien-Verbundmaterialien, **dadurch gekennzeichnet**, das ein Klebstoff verwendet wird, der die zwei Komponenten A und B enthält, wobei
(a) als Komponente A mindestens ein Polymeres mit einem Molekulargewicht (Mₙ) von mindestens 800, das mindestens eine durch Bestrahlung mit UV-Licht oder mit Elektronenstrahlen polymerisierbare funktionelle Gruppe und mindestens eine zur Reaktion mit einer mindestens ein acides Wasserstoffatom aufweisenden Verbindung fähige funktionelle Gruppe aufweist und
wobei unter einem aciden Wasserstoffatom ein nach dem Zerewittinof Test bestimmbares, an ein N-, O- oder S-Atom gebundenes , aktives Wasserstoffatom zu verstehen ist;
(b) als Komponente B mindestens eine Verbindung mit einem Molekulargewicht (Mₙ) von 100 bis 8000, die mindestens zwei durch Bestrahlung mit UV-Licht oder mit Elektronenstrahlen polymerisierbare funktionelle Gruppen aufweist,
eingesetzt wird.

2. Verfahren nach Anspruch 1, **dadurch gekennzeichnet, daß** Komponente A als durch Bestrahlung mit UV-Licht oder mit Elektronenstrahlen polymerisierbare funktionellen Gruppe, eine Gruppe mit olefinisch ungesättigter Doppelbindung aufweist.

3. Verfahren nach Anspruch 1 oder 2, **dadurch gekennzeichnet, daß** Komponente A als zur Reaktion mit einer mindestens ein acides Wasserstoffatom aufweisenden Verbindung fähige funktionelle Gruppe, eine Isocyanatgruppe aufweist.

4. Verfahren nach einem der Ansprüche 1 bis 3, **dadurch gekennzeichnet, daß** Komponente B als durch Bestrahlung mit UV-Licht oder mit Elektronenstrahlen polymerisierbare funktionelle Gruppen mindestens zwei Gruppen mit olefinisch ungesättigter Doppelbindung aufweist.

5. Verfahren nach einem der Ansprüche 1 bis 4, **dadurch gekennzeichnet, daß** als Komponente A mindestens ein Polyurethan enthalten ist.

6. Verfahren nach einem der Ansprüche 1 bis 5, **dadurch gekennzeichnet, daß** der Klebstoff
(c) als Komponente C mindestens einen Photoinitiator, der dazu in der Lage ist bei Bestrahlung mit UV-Strahlung eine Polymerisation olefinisch ungesättigter Doppelbindungen zu initiieren,
enthält.

7. Verfahren nach Anspruch 6, **dadurch gekennzeichnet, daß** Komponente C einen Photoinitiator enthält, der ein Molekulargewicht von mehr als 200 aufweist.

8. Verfahren nach Anspruch 6 oder 7, **dadurch gekennzeichnet, daß** Komponente C einen Photoinitiator enthält, der erhältlich ist, indem ein mindestens dreiwertiger Alkohol mit Caprolacton zu einem mindestens drei OH-Gruppen tragenden Polycaprolacton mit einem Molekulargewicht von etwa 300 bis etwa 900 umgesetzt wird, und anschließend das Polycaprolacton mittels einer mindestens zwei Isocyanatgruppen tragenden Verbindung mit 1-[4-(2-Hydroxyethoxy)phenyl)-2-hydroxy-2-methylpropan-1-on verknüpft wird.

9. Verfahren nach einem der Ansprüche 1 bis 7, **dadurch gekennzeichnet, daß** der Klebstoff bei 70°C eine Viskosität von 1000 mPas bis 6000 mPas aufweist.

10. Verfahren nach einem der Ansprüche 1 bis 9, **dadurch gekennzeichnet, daß** der Klebstoff
(d) als Komponente D eine Verbindung mit mindestens zwei aciden Wasserstoffatomen
enthält.

11. Verfahren nach Anspruch 10, **dadurch gekennzeichnet, daß** als Komponente D eine mindestens zwei OH-Gruppen aufweisende Verbindung enthalten ist.

12. Verfahren nach Anspruch 1, **dadurch gekennzeichnet, daß** der Klebstoff
- 10 Gew.-% bis 99,9 Gew.-% Komponente A,
- 0,1 Gew.-% bis 90 Gew.-% Komponente B,
- 0 Gew.-% bis 10 Gew.-% Komponente C,
- 0 Gew.-% bis 49 Gew.-% Komponente D sowie
- 0 Gew.-% bis 49 Gew.-% Zusatzstoffe
enthält, wobei die Summe der Bestandteile 100 Gew.-% ergibt.

13. Verfahren zur Herstellung von Verbundmaterialien nach Anspruch 1, **gekennzeichnet durch** das teil- oder vollflächige Verkleben von Folien.

## Claims

1. Process for producing film-based composite materials, **characterized in that** an adhesive which comprises the two components A and B is used,
(a) component A being at least one polymer having a molecular weight (Mₙ) of at least 800 that has at least one functional group polymerizable by irradiation with UV light or with electron beams and has at least one functional group capable of reacting with a compound having at least one acidic hydrogen atom, i.e. an active hydrogen atom which can be determined in accordance with the Zerevitinov test and is attached to an N, O or S atom; and
(b) component B being at least one compound having a molecular weight (Mₙ) of from 100 to 8000 which has at least two functional groups polymerizable by irradiation with UV light or with electron beams.

2. Process according to Claim 1, **characterized in that** component A has a group having an olefinically unsaturated double bond as the functional group polymerizable by irradiation with UV light or with electron beams.

3. Process according to Claim 1 or 2, **characterized in that** component A has an isocyanate group as the functional group capable of reacting with a compound having at least one acidic hydrogen atom.

4. Process according to any of Claims 1 to 3, **characterized in that** component B has at least two groups having an olefinically unsaturated double bond as functional groups polymerizable by irradiation with UV light or with electron beams.

5. Process according to any of Claims 1 to 4, **characterized in that** at least one polyurethane is present as component A.

6. Process according to any of Claims 1 to 5, **characterized in that** the adhesive comprises
(c) as component C at least one photoinitiator which is capable of initiating the polymerization of olefinically unsaturated double bonds on exposure to UV radiation.

7. Process according to Claim 6, **characterized in that** component C comprises a photoinitiator which has a molecular weight of more than 200.

8. Process according to Claim 6 or 7, **characterized in that** component C comprises a photoinitiator obtainable by reacting an at least trihydric alcohol with caprolactone to give a polycaprolactone which carries at least three OH groups and has a molecular weight of from about 300 to about 900, and subsequently linking the polycaprolactone with 1-[4-(2-hydroxyethoxy)phenyl]-2-hydroxy-2-methylpropan-1-one by means of a compound which carries at least two isocyanate groups.

9. Process according to any of Claims 1 to 7, **characterized in that** the adhesive has a viscosity at 70°C of from 1000 mPas to 6000 mPas.

10. Process according to any of Claims 1 to 9, **characterized in that** the adhesive comprises
(d) as component D a compound having at least two acidic hydrogen atoms.

11. Process according to Claim 10, **characterized in that** a compound having at least two OH groups is present as component D.

12. Process according to Claim 1, **characterized in that** the adhesive comprises
- from 10% by weight to 99.9% by weight of component A,
- from 0.1% by weight to 90% by weight of component B,
- from 0% by weight to 10% by weight of component C,
- from 0% by weight to 49% by weight of component D, and
- from 0% by weight to 49% by weight of additives,
the sum of the constituents being 100% by weight.

13. Process for producing composite materials according to Claim 1, **characterized by** the part-area or full-area adhesive bonding of films.

## Revendications

1. Procédé de fabrication de matériaux composites à base de feuilles
**caractérisé en ce qu'**
on utilise un adhésif qui contient deux composants A et B dans lequel on met en oeuvre,
(a) comme composant A au moins un polymère ayant un poids moléculaire (Mₙ) d'au moins 800, qui possède au moins un groupe fonctionnel polymérisable par irradiation avec la lumière UV ou par des rayons d'électrons, et au moins un groupe fonctionnel capable d'une réaction avec un composé possédant au moins un atome d'hydrogène acide, et
pour lequel on entend par un « atome d'hydrogène acide » un atome d'hydrogène actif, lié à un atome de N, O ou S, déterminable selon le test de Zerewittinof,
(b) comme composant B au moins un composé ayant un poids moléculaire (Mₙ) de 100 à 8000 qui possède au moins deux groupes fonctionnels polymérisables par irradiation avec la lumière UV ou avec des rayons d'électrons.

2. Procédé selon la revendication 1,
**caractérisé en ce que**
le composant A en tant que groupe fonctionnel polymérisable par irradiation avec la lumière UV ou avec des rayonnements d'électrons, possède un groupe ayant une double liaison non saturée oléfiniquement.

3. Procédé selon la revendication 1 ou la revendication 2,
**caractérisé en ce que**
le composant A possède en tant que groupe fonctionnel apte à la réaction avec un composé possédant au moins un atome d'hydrogène acide, un groupe isocyanate.

4. Procédé selon l'une des revendications 1 à 3,
**caractérisé en ce que**
le composant B possède comme groupes fonctionnels polymérisables par irradiation avec de la lumière UV ou avec des rayons d'électrons, au moins deux groupes porteurs de double liaisons non saturées oléfiniquement.

5. Procédé selon l'une des revendications 1 à 4,
**caractérisé en ce que**
comme composant A au moins un polyuréthane est contenu.

6. Procédé selon l'une des revendications 1 à 5,
**caractérisé en ce que**
l'adhésif contient
(c) comme composant C au moins un photodéclencheur qui est en mesure de déclencher en outre par irradiation avec un rayonnement UV, une polymérisation de double liaisons non saturées oléfiniquement.

7. Procédé selon la revendication 6,
**caractérisé en ce que**
le composant C renferme un photodéclencheur qui possède un poids moléculaire supérieur à 200.

8. Procédé selon la revendication 6 ou la revendication 7,
**caractérisé en ce que**
le composant C renferme un photodéclencheur qui est accessible par un procédé dans lequel un alcool au moins trifonctionnel est mis à réagir avec la caprolactone en une polycaprolactone portant au moins trois groupes OH, ayant un poids moléculaire d'environ 300 à 900 et ensuite on couple la polycaprolactone à l'aide d'un composé porteur d'au moins deux groupes isocyanate, avec la 1-[4-(2-hydroxyéthoxy)phényl]-2-hydroxy-2-méthylpropane-1-one.

9. Procédé selon l'une des revendications 1 à 7,
**caractérisé en ce que**
l'adhésif possède à 70°C une viscosité allant de 1000 mPas à 6000 mPas.

10. Procédé selon l'une des revendications 1 à 9,
**caractérisé en ce que**
l'adhésif renferme
(d) comme composant D un composé ayant au moins deux atomes d'hydrogène acide.

11. Procédé selon la revendication 10,
**caractérisé en ce que**
comme composant D un composé possédant au moins deux groupes OH, est contenu.

12. Procédé selon la revendication 1,
**caractérisé en ce que**
l'adhésif contient
- de 10 % en poids à 99,9 % en poids de composant A,
- de 0,1 % en poids à 90 % en poids de composant B,
- de 0 % en poids à 10 % en poids de composant C,
- de 0 % en poids à 49 % en poids de composant D,
ainsi que
- de 0 % en poids à 49 % en poids d'additifs
- pour lesquels la somme des constituants donne 100 % en poids.

13. Procédé de fabrication de matériaux d'assemblage selon la revendication 1,
**caractérisé par**
l'encollage partiel ou complet des feuilles.
